(19) Europäisches Patentamt
European Patent Office
Office européen des brevets

(11) Veröffentlichungsnummer : **0 043 560**
**B1**

(12) # EUROPÄISCHE PATENTSCHRIFT

(45) Veröffentlichungstag der Patentschrift : **16.02.83**

(51) Int. Cl.³ : **C 09 B 62/513**, D 06 P 3/66, D 06 P 3/10

(21) Anmeldenummer : **81105135.8**

(22) Anmeldetag : **02.07.81**

(54) **Wasserlösliche Azoverbindungen, Verfahren zu ihrer Herstellung und ihre Verwendung als Farbstoffe.**

(30) Priorität : **05.07.80 DE 3025572**

(43) Veröffentlichungstag der Anmeldung : **13.01.82 Patentblatt 82/02**

(45) Bekanntmachung des Hinweises auf die Patenterteilung : **16.02.83 Patentblatt 83/07**

(84) Benannte Vertragsstaaten : **BE CH DE FR GB IT LI**

(56) Entgegenhaltungen :
**DE B 1 262 213**
**GB A 712 037**

(73) Patentinhaber : **HOECHST AKTIENGESELLSCHAFT**
**Postfach 80 03 20**
**D-6230 Frankfurt/Main 80 (DE)**

(72) Erfinder : **Hoyer, Ernst, Dr.**
**Eptingweg 3**
**D-6230 Frankfurt am Main 80 (DE)**
Erfinder : **Kohlhaas, Folker, Dr.**
**Akazienring 64**
**D-6203 Hochheim am Main (DE)**
Erfinder : **Meininger, Fritz, Dr.**
**Loreleistrasse 7**
**D-6230 Frankfurt am Main 80 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 043 560 B1

Wasserlösliche Azoverbindungen, Verfahren zu ihrer Herstellung und ihre Verwendung als Farbstoffe

Die Erfindung liegt auf dem technischen Gebiet der wasserlöslichen sauren Textilfarbstoffe, insbesondere in der Anwendung als faserreaktive Farbstoffe.

Aus der deutschen Patentschrift 24 17 253 ist ein faserreaktiver Disazofarbstoff bekannt, der aus 1-Amino-8-naphthol-3,6-disulfonsäure als bivalente Kupplungskomponente und aus 2 Mol 4-(β-Sulfatoäthylsulfonyl)-anilin als Diazokomponenten aufgebaut ist. Andere ähnliche faserreaktive Disazofarbstoffe mit einer Disulfo-1,8-aminonaphthol-Kupplungskomponente sind aus der deutschen Auslegeschrift 16 44 198 bekannt. Insbesondere der erstgenannte Farbstoff zeigt zwar gute Gebrauchsechtheiten und außerdem sehr gute anwendungstechnische Eigenschaften, jedoch besitzt er, wie auch die anderen erwähnten bekannten Disazofarbstoffe, neben allen Vorzügen den Nachteil, in Gegenwart von Kupferionen Farbtonveränderungen zu erleiden.

Die Unempfindlichkeit von Farbstoffen gegenüber Kupferionen ist jedoch für die Praxis sehr bedeutsam, da solche (metallfreien) Farbstoffe auch mit anderen faserreaktiven Farbstoffen, die Kupfer komplex gebunden enthalten, kombinierbar sein müssen. Weiterhin können bei Verwendung kupferner Behälter, wie beispielsweise der Chassis eines Foulards, oder kupferner Druckwalzen Kupferionen in Färbeflotten, Klotzflotten oder Druckpasten eingebracht werden, die dann den Farbton von kupferempfindlichen Farbstoffen, wie beispielsweise dem anfangs erwähnten bekannten Disazofarbstoff, unerwünscht beeinflussen.

Mit der vorliegenden Erfindung wurden nunmehr neue Disazoverbindungen gefunden, die eine gute Beständigkeit gegenüber Kupferionen bei sonst ähnlich guten färberischen Eigenschaften und Echtheiten besitzen. Diese neuen Disazoverbindungen haben, in Form der freien Säure geschrieben, die allgemeine Formel (1)

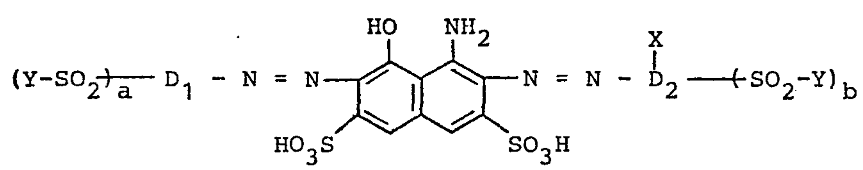

(1)

In dieser Formel (1) bedeuten :

$D_1$ ist der Benzol- oder Naphthalinkern, welche außer durch die Gruppe $Y—SO_2—$ noch durch einen oder zwei Substituenten aus der Gruppe Fluor, Chlor, Brom, Carboxy, niederes Alkyl, niederes Alkoxy und Nitro und/oder eine, zwei oder drei Sulfogruppen substituiert sein können ;

$D_2$ ist der Benzol- oder Naphthalinkern, welche durch den nachstehend definierten Substituenten X substituiert sind und außer durch die Gruppe $—SO_2—Y$ noch durch einen oder zwei Substituenten aus der Gruppe Carboxy, niederes Alkyl und niederes Alkoxy und/oder durch einen Substituenten aus der Gruppe Fluor, Chlor, Brom und Nitro und/oder eine, zwei oder drei Sulfogruppen substituiert sein können, wobei $D_1$ und $D_2$ gleich oder verschieden voneinander sein können ;

X steht zwingend in ortho-Stellung zur Azogruppe an $D_2$ gebunden und bedeutet ein Fluor-, Chlor- oder Bromatom ;

Y ist die Vinyl-, β-Sulfatoäthyl-, β-Chloräthyl-, β-Thiosulfatoäthyl- oder eine β-Acyloxy-äthyl-Gruppe mit dem Acylrest einer Alkancarbonsäure mit 1 bis 4 C-Atomen im Alkylrest, wie der Essigsäure, oder einer gegebenenfalls durch Carboxy, Sulfo und/oder niederes Alkyl substituierten Benzoesäure oder einer gegebenenfalls durch Carboxy, Sulfo und/oder niederes Alkyl substituierten Benzolsulfonsäure ;

a steht für die Zahl Null oder 1 und

b steht für die Zahl Null oder 1, wobei

die Summe von (a + b) 1 oder 2 ist.

Die erfindungsgemäßen Verbindungen können sowohl in Form der freien Säure als auch in Form ihrer Salze vorliegen. Bevorzugt sind sie in Form der Salze, insbesondere der Alkali- und Erdalkalimetallsalze, hiervon insbesondere die Natrium-, Kalium- und auch Calciumsalze. Die neuen Verbindungen finden bevorzugt in Form der Alkalimetallsalze Verwendung zum Färben und Bedrucken von Fasermaterialien aus natürlicher oder regenerierter Cellulose oder auch natürlichen, regenerierten oder synthetischen Polyamiden sowie von Leder.

Die im vorhergehenden und im nachfolgenden benutzte Angabe « niedere » bedeutet, daß die damit bezeichneten Gruppen Alkylreste oder Alkylenreste von 1 bis 4 C-Atomen enthalten bzw. daraus bestehen. Der Substituent X ist bevorzugt das Chlor- oder Bromatom, und $D_2$ steht bevorzugt für den Benzolkern, der wie oben angegeben durch X substituiert ist oder durch die anderen bezeichneten Substituenten substituiert sein kann.

Von den erfindungsgemäßen Azoverbindungen der oben definierten allgemeinen Formel (1) können insbesondere diejenigen als bevorzugt genannt werden, bei denen das Formelglied b für die Zahl 1 steht, $D_2$ den Benzolkern bedeutet, an dem in o-Stellung zur Azogruppe der Substituent X steht, welcher die

obengenannte Bedeutung hat, vorzugsweise jedoch ein Chlor- oder Bromatom ist, und an den noch zusätzlich ein Substituent aus der Gruppe niederes Alkyl, niederes Alkoxy, Chlor, Brom und Sulfo gebunden sein kann. — Hiervon sind weiterhin diejenigen bevorzugt zu nennen, in welchen a für die Zahl 1 steht und $D_1$ den Benzolkern bedeutet, der noch zusätzlich durch einen oder zwei Substituenten aus der Gruppe niederes Alkyl, niederes Alkoxy, Chlor, Fluor, Carboxy, Sulfo und Nitro substituiert sein kann, wobei die Gruppe der Formel $—SO_2—Y$ an den Benzolkern in m- oder p-Stellung zur Azogruppe gebunden ist und wobei die Formelreste $Y—SO_2—D_1—$ und $—D_2(—X)—SO_2Y$ gleich oder verschieden voneinander sein können ; desweiteren sind von den erfindungsgemäßen, obengenannten bevorzugten Azoverbindungen mit b gleich 1 auch diejenigen bevorzugt, in denen das Formelglied a für die Zahl 1 steht und $D_1$ den Naphthalinkern bedeutet, der zusätzlich durch eine oder zwei Sulfogruppen substituiert sein kann, desweiteren solche, in denen das Formelglied a für die Zahl Null steht und $D_1$ für den Monosulfo-, Disulfo- oder Trisulfonaphthyl-Rest steht oder den Phenylrest bedeutet, der unsubstituiert ist, bevorzugt jedoch durch 1 oder 2 Substituenten aus der Gruppe Sulfo, Carboxy, niederes Alkyl, niederes Alkoxy, Chlor, Brom und Nitro substituiert ist.

Weiterhin sind diejenigen erfindungsgemäßen Azoverbindungen bevorzugt, bei denen der Formelindex b gleich Null und a die Zahl 1 ist, $D_1$, Y und X die obengenannten, insbesondere bevorzugten Bedeutungen haben und $D_2$ der Naphthalinkern, bevorzugt der Benzolkern ist, die außer durch den Formelrest X noch durch mindestens eine Sulfogruppe subsitutiert sind und zusätzlich noch durch einen weiteren Substituenten aus der Gruppe niederes Alkyl, niederes Alkoxy, Nitro und Chlor substituiert sein können.

Weiterhin können die erfindungsgemäßen Disazoverbindungen der nachstehenden Beispiele 1, 3, 6, 27, 31, 42, 43 und 48 hervorgehoben werden.

Die vorliegende Erfindung betrifft weiterhin ein Verfahren zur Herstellung der Verbindungen der allgemeinen Formel (1). Dieses ist dadurch gekennzeichnet, daß man ein Diazoniumsalz einer Aminoverbindung der allgemeinen Formel (2)

$$H_2N - \overset{\overset{X}{|}}{D_2} —(SO_2 - Y)_b \qquad (2)$$

in welcher $D_2$, X, Y und b obengenannten Bedeutungen haben, mit 1-Amino-8-hydroxy-naphthalin-3,6-disulfonsäure in mittelstarkem bis stark saurem Medium kuppelt und sodann die so hergestellte Monoazoverbindung in schwach saurem bis neutralem oder schwach alkalischem Medium mit der Diazoniumsalzverbindung einer Aminoverbindung der allgemeinen Formel (3)

$$(Y—SO_2)_a— D_1—NH_2 \qquad (3)$$

in welcher $D_1$, Y und a die obengenannten Bedeutungen haben, kuppelt, wobei man die beiden aromatischen Amine der Formeln (2) und (3) so wählt, daß mindestens eines eine Gruppe der Formel $—SO_2—Y$ gebunden enthält.

Die Diazotierung der aromatischen Amine (2) und (3) kann in üblicher, bekannter Verfahrensweise erfolgen, beispielsweise in saurem, wäßrigem Medium mittels Natriumnitrit bei einer Temperatur zwischen − 5 °C und + 15 °C. Ebenso werden die beiden Kupplungsreaktionen in an und für sich bekannter Verfahrensweise durchgeführt. Die Kupplungsreaktion in der ersten Stufe erfolgt im sauren Bereich, wie bei einem pH-Wert zwischen 0,5 und 3, und bevorzugt bei einer Temperatur zwischen 5 und 30 °C. Die Kupplungsreaktion in der zweiten Stufe erfolgt bevorzugt bei einem pH-Wert zwischen 4 und 8, insbesondere zwischen 5 und 7, und ebenso bevorzugt bei einer Temperatur zwischen 5 und 30 °C. In der ersten, sauer ausgeführten Kupplungsstufe erfolgt die Kupplung in o-Stellung zur Aminogruppe der Aminonaphthol-Kupplungskomponente. Als säurebindende Mittel zur Einstellung des pH-Bereiches bei der zweiten Kupplungsreaktion werden vorzugsweise die Alkali- oder Erdalkalimetallsalze von schwachen anorganischen oder organischen Säuren, so der Kohlensäure, der Essigsäure, der Borsäure, der Oxalsäure, oder die sauren Salze der Phosphorsäure verwendet. Insbesondere eignen sich hierfür Natrium- und Kaliumcarbonat, Natriumacetat, Natriumborat und besonders vorteilhaft Natriumhydrogencarbonat.

Erfindungsgemäße Verbindungen der allgemeinen Formel (1) in welcher Y für die β-Sulfatoäthylgruppe steht, können auch in der Weise erfindungsgemäß hergestellt werden, daß man in der oben angegebenen Verfahrensweise eine oder beide der aromatischen Amine der allgemeinen Formeln (2) und (3), in welchen jedoch eines der beiden Y oder beide Y für die β-Hydroxyäthylgruppe stehen, mit 1-Amino-8-naphthol-3,6-disulfonsäure kuppelt und die so hergestellte Disazoverbindung mit der Konstitution der

allgemeinen Formel (1), in welcher jedoch eines der beiden Y oder beide für die β-Hydroxyäthylgruppe stehen, in an und für sich bekannter Verfahrensweise mit einem Sulfatierungsmittel in die erfindungsgemäße Sulfatoverbindung überführt.

Die erfindungsgemäßen Verbindungen lassen sich aus ihren Herstellungsgemischen nach allgemein bekannten Methoden für wasserlösliche Verbindungen isolieren, so beispielsweise durch Ausfällen aus dem Reaktionsmedium mittels eines Elektrolyten, wie beispielsweise Natriumchlorid oder Kaliumchlorid, oder aber durch Eindampfen der Reaktionslösung selbst, beispielsweise durch Sprühtrocknung. Falls die letztgenannte Art der Isolierung der erfindungsgemäßen verbindungen gewählt wird, empfiehlt es sich in Fällen, in denen die Reaktionslösung größere Sulfatmengen enthält, vor dem Eindampfen das in den Lösungen vorhandene Sulfat durch Fällung als Calciumsulfat und Abtrennung durch Filtration zu entfernen. In manchen Fällen kann es auch wünschenswert sein, die Farbstofflösung, gegebenenfalls nach Aufkonzentrieren und/oder Zusatz von Puffersubstanzen, direkt als Flüssigpräparation der färberischen Verwendung zuzuführen. Die neuen Verbindungen der vorliegenden Erfindung eignen sich hervorragend als farbstoffe, insbesondere als faserreaktive Farbstoffe, zum Färben oder Bedrucken von Fasermaterialien aus nativer oder regenerierter Cellulose oder aus natürlichen, regenerierten oder synthetischen Polyamiden oder Polyurethanen, wie beispielsweise von Baumwolle, Hanf, Leinen, Jute, Viskosekunstseide, Wolle, Seide, Polyamid-6, Polyamid-6,6, Polyamid-11, Polyamid-4, oder von Leder.

Besonders geeignet sind die neuen Verbindungen zum Färben und Bedrucken von Cellulosefasermaterialien.

Die neuen Verbindungen werden auf die genannten Substrate analog bekannten und üblichen Färbe- und Druckverfahren für wasserlösliche, insbesondere faserreaktive, Farbstoffe appliziert und fixiert. Sie besitzen eine gute bis sehr gute Löslichkeit und Stabilität in den Druckpasten und Färbebädern und liefern mit hohen Fixiergraden grünstichig bis rotstichig marineblaue bzw. grünstichig bis blaustichig schwarze Färbungen und Drucke, die sich, insbesondere bei den Färbungen und Drucken auf Cellulosefasern, durch gute bis sehr gute Gebrauchs- und Fabrikationsechtheiten, wie beispielsweise Licht-, Wasch-, Schweiß-, Meerwasser-, Chlorbadewasser-, Säure- und Überfärbeechtheiten sowie Bügel-, Plissier-, Dekatier-, Trockenreinigungs- und Reibechtheiten, auszeichnen. Nicht fixierte Farbstoffanteile lassen sich gut auswaschen.

Die vorliegende Erfindung betrifft somit weiterhin die Verwendung der erfindungsgemäßen Verbindungen zum Färben oder Bedrucken der obengenannten Fasermaterialien bzw. ein Verfahren zum Färben oder Bedrucken der obengenannten Fasermaterialien, bei welchen die erfindungsgemäßen Verbindungen analog bekannten und üblichen Verfahrensweisen der Färberei- und Druckereiindustrie auf das Fasermaterial appliziert und anschließend fixiert werden. Beispielsweise werden diese Verfahren so ausgeführt, daß man Cellulosefasermaterialien in einem wäßrigen, gegebenenfalls übliche Färbehilfsmittel enthaltenden Färbehad nach dem Ausziehverfahren aus langer Flotte unter Verwendung von alkalisch wirkenden Mitteln behandelt, insbesondere bei Temperaturen zwischen 60 und 105 °C, wobei das Fasermaterial in sehr guten Farbausbeuten gefärbt wird.

Mit den Klotzverfahren, die in der Technik bekannt und üblich sind, werden auf Cellulosefasermaterialien ebenfalls Färbungen mit ausgezeichneten Farbausbeuten erhalten ; dieses Verfahren kann ein- oder zweiphasig durchgeführt werden, so daß die Fixierung mit Hilfe des alkalisch wirkenden Mittels, das gleichzeitig oder nachträglich zur Applikation des Farbstoffes auf das Fasermaterial aufgebracht wurde, oder durch Verweilen des geklotzten Fasermaterials für 5 Minuten bis 20 Stunden bei Raumtemperatur oder Temperaturen bis zu 60 °C oder durch Dämpfen oder durch Behandlung mit Trockenhitze durchgeführt werden kann. Nicht fixierte Farbstoffanteile lassen sich leicht auswaschen.

Die Verwendung der erfindungsgemäßen Verbindungen in Druckverfahren erfolgt analog den bekannten und üblichen Druck- und Fixiermethoden zum Färben von Cellulosefasern. Man kann hierbei bevorzugt so vorgehen, daß einphasig in Anwesenheit von Natriumbicarbonat oder anderer säurebindender Mittel, wie Kaliumbicarbonat, Natrium- oder Kaliumcarbonat, Natronlauge, Kalilauge oder Natriumtrichloracetat, in der Druckpaste und anschließendem Dämpfen bei 101-103 °C oder zweiphasig unter Bedrucken mit einer neutralen oder schwach sauren Druckpaste und anschlißender Fixierung durch ein heißes, elektrolythaltiges, alkalisches Bad oder durch Überklotzen mit einer alkalischen, elektrolythaltigen Flotte und anschließendem Verweilen, Dämpfen oder Behandlung mit Trockenhitze arbeitet ; man erhält farbstarke Drucke mit gutem Stand der Konturen und einem klaren Weißfond. Die Drucke zeigen unabhängig von den Fixierbedingungen eine hohe Nuancenkonstanz.

Das Färben der Polyamid- oder Polyurethanfasern wird üblicherweise aus saurem Milieu ausgeführt. So kann man beispielsweise dem Färbebad Essigsäure oder einen Puffer aus Essigsäure und Ammoniumacetat zufügen, um den gewünschten pH-Wert zu erhalten. Zwecks Erreichung einer brauchbaren Egalität der Färbungen empfiehlt sich ein Zusatz an üblichen Egalisierhilfsmitteln, beispielsweise auf Basis eines Umsetzungsproduktes von Cyanurchlorid mit der dreifach molaren Menge einer Aminobenzolsulfonsäure und/oder einer Aminonaphthalinsulfonsäure und/oder auf Basis eines Umsetzungsproduktes von Stearylamin mit Aethylenoxid. Die Färbungen können sowohl bei Siedetemperatur als such bei 110-120 °C ausgeführt werden.

Die nachfolgenden Beispiele dienen zur Erläuterung der Erfindung. Die dort angegebenen teile sind Gewichtsteile, die Angaben in Prozent beziehen sich auf Gewichtsprozent, sofern nichts anderes vermerkt. Volumenteile verhalten sich zu Gewichtsteilen wie Liter zu Kilogramm.

Beispiel 1

Eine neutrale Lösung von 360 Teilen 2-Brom-4-(β-sulfatoäthylsulfonyl)-anilin in 1 000 Teilen Wasser werden mit 800 Teilen Eis und 263 Teilen einer 31 %igen wäßrigen Salzsäure versetzt. Anschließend diazotiert man mittels 178 Teilen einer 40 %igen wäßrigen Natriumnitrillösung. Nach Zerstörung des Nitritüberschusses mit Amidosulfonsäure werden 159,5 Teile 1-Amino-8-naphthol-3,6-disulfonsäure eingestreut. Nach einiger Zeit wird mit Natriumbicarbonat ein pH-Wert von 5 bis 6 eingestellt und der Reaktionsansatz wird noch etwa zwei Stunden gerührt. Die so hergestellte Disazoverbindung wird durch Sprühtrocknung der Kupplungslösung, gegebenenfalls nach einer Klärfiltration, isoliert. Man erhält etwa 785 Teile eines schwarzen, elektrolythaltigen Pulvers, das 545 Teile des Natriumsalzes der Verbindung der Formel

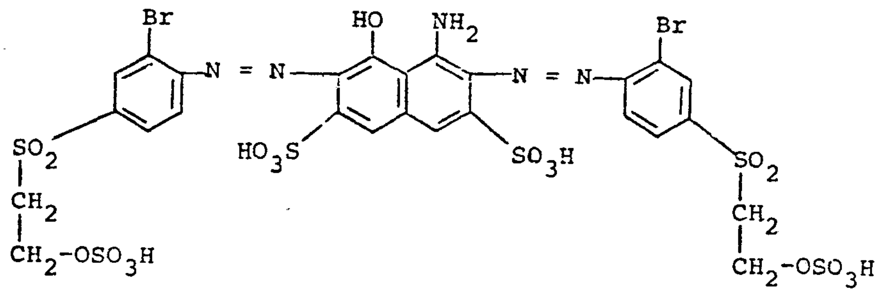

enthält. Diese Disazoverbindung hat sehr gute faserreaktive Farbstoffeigenschaften und färbt beispielsweise Cellulosefasermaterialien, wie Baumwolle, nach den in der Technik üblichen und bekannten Färbe- und Druckmethoden und für faserreaktive Farbstoffe gängigen Fixiermethoden in grünstichig marineblauen bis grünstichig schwarzen Tönen. Die mit ihr erhaltenen Färbungen und Drucke zeigen gute bis sehr gute Echtheiten, wie beispielsweise Wasch-, Schweiß-, Reib-, Bügel-, Lösungsmittel-, Überfärbe- und Säureechtheit, sowie eine gute Lichtechtheit.

Sowohl in Abwesenheit als auch in Gegenwart von Kupferionen liefert der Farbstoff nuancenkonstante Färbungen.

Beispiel 2

36 Teile 2-Brom-4-(β-sulfatoäthylsulfonyl)-anilin werden analog der in Beispiel 1 angegebenen Verfahrensweise diazotiert und mit 31,9 Teilen 1-Amino-8-naphthol-3,6-disulfonsäure zur Monoazoverbindung gekuppelt. Nach mehrstündigem Rühren wird sodann mit Natriumcarbonat der pH-Wert auf 6,5 gestellt und anschließend eine Diazoniumsalzsuspension aus 28,1 Teilen 4-(β-Sulfatoäthylsulfonyl)-anilin eingetragen. Nach ca. zweistündigem Rühren ist die reaktion beendet. Die gebildete Disazoverbindung wird durch Eindampfen oder Sprühschwarzes, elektrolythaltiges Pulver erhalten, das das Natriumsalz der Verbindung der Formel

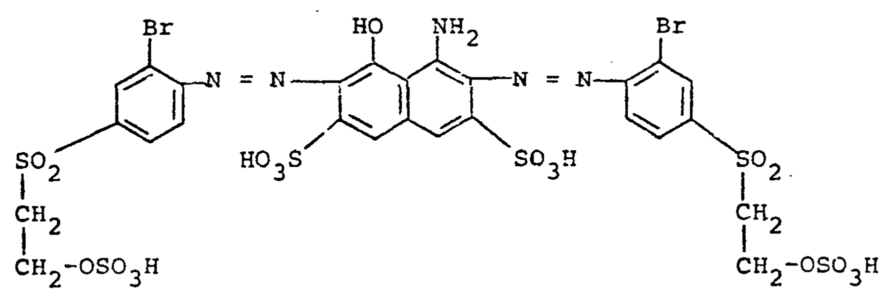

enthält. Diese besitzt sehr gute anwendungstechnische Eigenschaften und färbt beispielsweise Cellulosefasermaterialien gemäß den für faserreaktive Farbstoffe üblichen Applikations- und Fixiermethoden in marineblauen bis schwarzen Farbtönen. Die Färbungen zeigen gute Echtheitseigenschaften, und der Farbstoff liefert auch in Gegenwart von Kupferionen bestandige Farbtöne.

Beispiel 3

Eine neutrale Lösung von 21 Teilen 2-Chloranilin-5-sulfonsäure in 300 Teilen Wasser werden mit 200 Teilen Eis und 27 Teilen einer wäßrigen 31 %igen Salzsäure versetzt und mit 20,5 Volumenteilen einer 5n-Natriumnitritlösung diazotiert. Überschüssiges Nitrit wird mit Amidosulfonsäure anschließend zerstört, sodann werden 31,9 Teile 3,6-Disulfo-1,8-aminonaphthol eingetragen. Bis zur Beendigung der Kupplungsreaktion wird der Reaktionsansatz noch etwa 15 Stunden gerührt, sodann mit Natriumcarbonat auf einen pH-Wert von 6,5 eingestellt.

In einem separaten Ansatz werden 42 Teile 6-(β-Sulfatoäthylsulfonyl)-2-aminonaphthalin-1-sulfonsäure analog den obigen Angaben diazotiert. Die erhaltene Diazoniumsalzsuspension wird zu der hergestellten Lösung der Monoazoverbindung gegeben. Der pH-Wert wird bei 6 bis 7 gehalten und der reaktionsansatz noch 3 Stunden gerührt. Die hergestellte Disazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

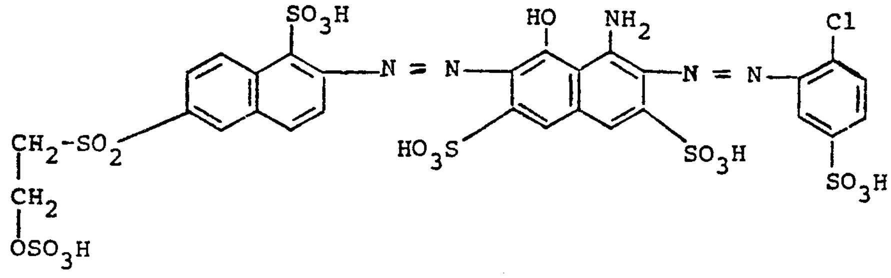

enthält. Diese eignet sich sehr gut als Farbstoff zum Färben von Cellulosefasermaterialien nach den in der Technik üblichen, bekannten Färbe- und Druckmethoden und gängigen Fixiermethoden für faserreaktive Farbstoffe ; sie liefert auf diesen Materialien marineblaue bis blaustichig schwarze Farbtöne mit guten Echtheitseigenschaften. Die Färbungen werden in guter Nuancenkonstanz auch in Gegenwart von Kupferionen erhalten.

Beispiele 4 bis 49

Man verfährt zur Herstellung der in den nachfolgenden Tabellenbeispielen durch ihre Diazokomponenten und durch ihre Kupplungskomponente charakterisierten erfindungsgemäßen Disazoverbindungen in erfindungsgemäßer Weise, beispielsweise analog den in den obigen Ausführungsbeispielen beschriebenen Verfahrensvarianten, durch Umsetzung der ersten Diazoniumverbindung des genannten Amins entsprechend der allgemeinen Formel (2) mit 3,6-Disulfo-1,8-aminonaphthol als Kupplungskomponente im sauren Bereich und anschließend durch Umsetzung dieser Monoazoverbindung mit dem zweiten Diazoniumsalz des aromatischen Amins entsprechend der allgemeinen Formel (3) im schwach sauren bis neutralen Bereich. Diese Disazoverbindungen stellen ebenso sehr gute faserreaktive Farbstoffe dar, die gute bis ausgezeichnete anwendungstechnische Eigenschaften besitzen und nuancenstabile Färbungen auch in Gegenwart von Kupferionen mit guten Echtheiten liefern ; die Farbtöne der mit diesen Disazoverbindungen erhältlichen Färbungen, die in der Nuance je nach Farbtiefe variieren können, sind für den jeweiligen erfindungsgemäßen Disazofarbstoff in der Tabelle genannt.

(Siehe die Tabellen, Seiten 7, 8 und 9)

| Bsp. | 1. Diazokomponente gemäß Formel (2) — Kupplung bei pH 0,5 - 3 | bivalente Kupplungskomponente | 2. Diazokomponente gemäß Formel (3) — Kupplung bei pH 5 - 7 | Farbton der Färbung |
|---|---|---|---|---|
| 4 | 2-Brom-4-(ß-sulfatoäthylsulfonyl)-anilin | 3,6-Disulfo-1,8-aminonaphthol | 2-Methoxy-5-methyl-4-(ß-sulfatoäthylsulfonyl)-anilin | grünst. marineblau bis schwarz |
| 5 | dito | dito | 3-(ß-Sulfatoäthylsulfonyl)-anilin | marineblau bis schwarz |
| 6 | dito | dito | 2-Chlor-4-(ß-sulfatoäthylsulfonyl)-anilin | dito |
| 7 | dito | dito | 2-Nitro-4-(ß-sulfatoäthylsulfonyl)-anilin | grünst. marineblau bis schwarz |
| 8 | dito | dito | 2-Sulfo-4-(ß-sulfatoäthylsulfonyl)-anilin | dito |
| 9 | dito | dito | 4-Vinylsulfonyl-anilin | marineblau bis schwarz |
| 10 | dito | dito | 4-(ß-Chloräthylsulfonyl)-anilin | dito |
| 11 | dito | dito | 4-(ß-Thiosulfatoäthylsulfonyl)-anilin | dito |
| 12 | dito | dito | 4-(ß-Acetoxyäthylsulfonyl)-anilin | dito |
| 13 | dito | dito | 4-(ß-Benzoyloxyäthylsulfonyl)-anilin | dito |
| 14 | dito | dito | 2-Chloranilin | grünst. marineblau |
| 15 | dito | dito | 2,4-Dichloranilin | marineblau bis schwarz |
| 16 | dito | dito | 4-Amino-benzoesäure | marineblau |
| 17 | dito | dito | 3-Sulfoanilin | marineblau |
| 18 | dito | dito | 2,4-Disulfo-anilin | grünst. marineblau |
| 19 | dito | dito | 2,5-Disulfo-anilin | dito |

| Bsp. | 1. Diazokomponente gemäß Formel (2) — Kupplung bei pH 0,5 - 3 | bivalente Kupplungskomponente | 2. Diazokomponente gemäß Formel (3) — Kupplung bei pH 5 - 7 | Farbton der Färbung |
|---|---|---|---|---|
| 20 | 2-Brom-4-(ß-sulfatoäthylsulfonyl)-anilin | 3,6-Disulfo-1,8-aminonaphthol | 1,5-Disulfo-2-amino-naphthalin | marineblau bis schwarz |
| 21 | dito | dito | 2-Chlor-5-sulfo-anilin | grünst. marineblau |
| 22 | 2-Brom-4-vinylsulfonyl-anilin | dito | 4-(ß-Sulfatoäthylsulfonyl)-anilin | marineblau bis schwarz |
| 23 | 2-Chlor-4-(ß-sulfatoäthylsulfonyl)-anilin | dito | 2-Brom-4-(ß-sulfatoäthylsulfonyl)-anilin | dito |
| 24 | dito | dito | 2-Chlor-4-(ß-sulfatoäthylsulfonyl)-anilin | dito |
| 25 | 2-Fluor-anilin | dito | 4-(ß-Sulfatoäthylsulfonyl)-anilin | dito |
| 26 | 2-Brom-anilin | dito | dito | dito |
| 27 | 2,3-Dichlor-anilin | dito | dito | dito |
| 28 | 2-Chlor-5-sulfo-anilin | dito | dito | grünst. marineblau bis schwarz |
| 29 | 2-Methyl-4-sulfo-6-chlor-anilin | dito | dito | rotst. marineblau |
| 30 | 2-Chlor-5-sulfo-anilin | dito | 3-(ß-Sulfatoäthylsulfonyl)-4-methoxy-anilin | grünst. marineblau bis schwarz |
| 31 | dito | dito | 3-(ß-Sulfatoäthylsulfonyl)-anilin | marineblau bis schwarz |
| 32 | dito | dito | 2-Methoxy-5-methyl-4-(ß-sulfatoäthylsulfonyl)-anilin | grünst. marineblau bis schwarz |
| 33 | dito | dito | 2,5-Dimethoxy-4-(ß-sulfatoäthylsulfonyl)-anilin | grünst. marineblau |
| 34 | dito | dito | 2-Methoxy-5-(ß-sulfatoäthylsulfonyl)-anilin | grünst. marineblau bis schwarz |

| Bsp. | 1. Diazokomponente gemäß Formel (2) — Kupplung bei pH 0,5 - 3 | bivalente Kupplungskomponente | 2. Diazokomponente gemäß Formel (3) — Kupplung bei pH 5 - 7 | Farbton der Färbung |
|---|---|---|---|---|
| 35 | 2-Chlor-5-sulfo-anilin | 3,6-Disulfo-1,8-aminonaphthol | 4-(ß-Sulfatoäthylsulfonyl)-1-aminonaphthalin | grünstichig marineblau |
| 36 | dito | dito | 8-(ß-Sulfatoäthylsulfonyl)-2-aminonaphthalin | marineblau bis schwarz |
| 37 | dito | dito | 6-Sulfo-8-(ß-sulfatoäthylsulfonyl)-2-aminonaphthalin | grünstichig marineblau |
| 38 | dito | dito | 6-(ß-Sulfatoäthylsulfonyl)-2-aminonaphthalin | marineblau bis schwarz |
| 39 | dito | dito | 2-Brom-(ß-sulfatoäthylsulfonyl)-anilin | grünst. marineblau bis schwarz |
| 40 | 2,4-Dichlor-anilin | dito | dito | dito |
| 41 | 2-Chlor-anilin | dito | dito | grünst. marineblau |
| 42 | 2-Chlor-5-(ß-sulfatoäthylsulfonyl)-anilin | dito | 2-Chlor-anilin | marineblau bis schwarz |
| 43 | dito | dito | 2,3-Dichlor-anilin | dito |
| 44 | 2,5-Dichlor-4-sulfo-anilin | dito | 2,5-Dimethoxy-4-(ß-sulfatoäthylsulfonyl)-anilin | grünst. marineblau |
| 45 | 2-Bromanilin | dito | 6-(ß-Sulfatoäthylsulfonyl)-1-sulfo-2-aminonaphthalin | rotstichig marineblau bis schwarz |
| 46 | 2-Chlor-5-sulfo-anilin | dito | 2-Sulfo-4-(ß-sulfatoäthylsulfonyl)-anilin | marineblau bis schwarz |
| 47 | 2-Chlor-5-(ß-sulfatoäthylsulfonyl)-anilin | 3,6-Disulfo-1,8-aminonaphthol | 2-Chlor-5-(ß-sulfatoäthylsulfonyl)-anilin | grünstichig schwarz |
| 48 | 2-Chlor-anilin | dito | 4-(ß-Sulfatoäthylsulfonyl)-anilin | dito |
| 49 | 1-Chlor-2-aminonaphthalin | dito | dito | dito |

Anwendungsbeispiel 1

Ein Baumwollgewebe wird mit einer wäßrigen Färbeflotte imprägniert (geklotzt oder gepflatscht), die im Liter 28 g des erfindungsgemäßen Natriumsalzes der im Beispiel 1 formelmäßig angegebenen Disazoverbindung (entsprechend 40 g des gemäß Beispiel 1 erhaltenen Farbstoffpulvers), 30 g wasserfreies Natriumsulfat und 16 ml 32,5 %ige Natronlauge enthält. Das imprägnierte Gewebe wird auf eine Docke aufgewickelt, in eine Plastikfolie eingehüllt und 8 Stunden lang bei Raumtemperatur liegen lassen. Anschließend wird das Gewebe in üblicher Weise geseift und gespült ; es wird eine grünstichig schwarze Färbung erhalten, die gute bis sehr gute Gebrauchs- und Fabrikationsechtheiten, wie beispielsweise Wasch-, Schweiß-, Reib-, Bügel-, Lösungsmittel-, Überfärbe- und Säureechtheit, sowie eine gute Lichtechtheit besitzt.

Anwendungsbeispiel 2

20 Teile der im Beispiel 1 beschriebenen erfindungsgemäßen Disazoverbindung werden mit 80 Teilen Harnstoff vermischt und in 250 Teilen Wasser bei einer Temperatur von etwa 80 °C gelöst. Nach Abkühlen der Lösung auf 40 °C werden 400 Teile einer neutralen, 4 %igen wäßrigen Alginatverdickung und 15 Teile Natriumbicarbonat eingerührt ; das Ganze wird sodann durch weitere Alginatverdickung auf 1 000 Teile aufgefüllt und gut vermischt. Mit der so hergestellten druckpaste wird ein Baumwollgewebe bedruckt, das bei 60 °C getrocknet und anschließend zur Fixierung des farbstoffes 10 Minuten mit Wasserdampf von 101 bis 103 °C gedämpft wird. Der erhaltene Druck wird in üblicher Weise durch Seifen und Spülen fertiggestellt. Man erhält ein grünstichig-marineblaues Druckmuster mit den im Anwendungsbeispiel 1 erwähnten sehr guten Gebrauchs- und Fabrikationsechtheiten.

Beispielsweise in gleicher oder ähnlicher Weise lassen sich auch die anderen in den vorhergehenden Beispielen beschriebenen erfindungsgemäßen Disazofarbstoffe zur Herstellung von wertvollen färbungen und Drucken einsetzen.

**Ansprüche**

1. Disazoverbindungen, die, in Form der freien Säure geschrieben, die allgemeine Formel (1)

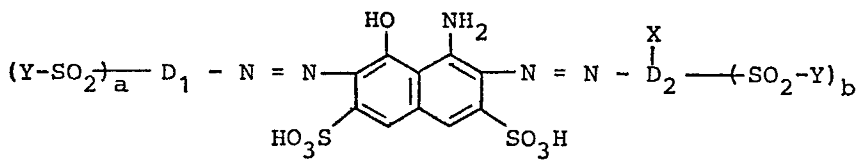

(1)

besitzen, in welcher bedeuten :

$D_1$ ist der Benzol- oder Naphthalinkern, welche außer durch dir Gruppe $Y—SO_2—$ noch durch einen oder zwei Substituenten aus der Gruppe Fluor, Chlor, Brom, Carboxy, ($C_1$-$C_4$) Alkyl, ($C_1$-$C_4$) Alkoxy und Nitro und/oder eine, zwei oder drei Sulfogruppen substituiert sein können ;

$D_2$ ist der Benzol- oder Naphthalinkern, welche durch den nachstehend definierten Substituenten X substituiert sind und außer durch die Gruppe $—SO_2—Y$ noch durch einen oder zwei Substituenten aus der Gruppe Carboxy, ($C_1$-$C_4$) Alkyl und ($C_1$-$C_4$) Alkoxy und/oder durch einen Substituenten aus der Gruppe Fluor, Chlor, Brom und Nitro und/oder eine, zwei oder drei Sulfogruppen substituiert sein können, wobei $D_1$ und $D_2$ gleich oder verschieden voneinander sein können ;

X steht zwingend in ortho-Stellung zur Azogruppe an $D_2$ gebunden und bedeutet ein Fluor-, Chlor-, oder Bromatom ;

Y ist die Vinyl-, β-Sulfatoäthyl-, β-Chloräthyl-, β-Thiosulfatoäthyl- oder eine β-Acyloxy-äthyl-Gruppe mit dem Acylrest einer C-Atomen in Alkylrest mit 1 bis 4 Alkancarbonsäure oder einer gegebenenfalls durch Carboxy, Sulfo und/oder ($C_1$-$C_4$) Alkyl substituierten benzoesäure oder einer gegebenenfalls durch Carboxy, Sulfo und/oder ($C_1$-$C_4$) Alkyl substituierten Benzolsulfonsäure ;

a steht für die Zahl Null oder 1 und

b steht für die Zahl Null oder 1, wobei die Summe von (a + b) 1 oder 2 ist, und deren Salze.

2. Verbindungen nach Anspruch 1 entsprechend der allgemeinen Formel (1), in welcher bedeuten :

b steht für die Zahl 1 ;

$D_2$ bedeutet den Benzolkern, an den in o-stellung zur Azogruppe der Substituent X gebunden ist und an den zusätzlich ein Substituent aus der Gruppe ($C_1$-$C_4$) Alkyl, ($C_1$-$C_4$) Alkoxy, Chlor, Brom und Sulfo gebunden sein kann, und

$D_1$, Y, X und a haben die Anspruch 1 genannten Bedeutungen.

3. Verbindungen nach Anspruch 2, in welchen $D_2$ und b sowie X und Y die in Anspruch 2 genannten Bedeutungen haben und a für die Zahl 1 steht und $D_1$ den Benzolkern bedeutet, der zusätzlich durch

einen oder zwei Substituenten aus der Gruppe ($C_1$-$C_4$) Alkyl, ($C_1$-$C_4$) Alkoxy, Chlor, Fluor, Carboxy, Sulfo und Nitro substituiert sein kann, wobei die Gruppe der Formel —$SO_2$—Y an den Benzolkern in m- oder p-Stellung zur Azogruppe gebunden ist und wobei die Formelreste Y—$SO_2$—$D_1$— und —$D_2$(X)—$SO_2$—Y gleich oder verschieden voneinander sein können.

4. Verbindungen nach Anspruch 2, in welchen $D_2$ und b sowie X und Y die in Anspruch 2 genannten Bedeutungen haben und a für die Zahl 1 steht und $D_1$ den Naphthalinkern bedeutet, der zusätzlich durch eine oder zwei Sulfogruppen substituiert sein kann.

5. Verbindungen nach Anspruch 2, in welchen $D_2$ und b sowie X und Y die in Anspruch 2 genannten Bedeutungen haben und in welchen a für die Zahl Null steht und $D_1$ den Monosulfo-, Disulfo- oder Trisulfonaphthyl-Rest bedeutet.

6. Verbindungen nach Anspruch 2, in denen $D_2$ und b sowie X und Y die in Anspruch 2 genannten Bedeutungen haben und a für die Zahl steht und $D_1$ den Phenylrest bedeutet, der unsubstituiert oder durch 1 oder 2 Substituenten aus der Gruppe Sulfo, Carboxy, ($C_1$-$C_4$) Alkyl, ($C_1$-$C_4$) Alkoxy, Chlor, Brom und Nitro substituiert ist.

7. Verbindungen nach Anspruch 1 in welchen der Formelindex a für die Zahl 1 und der Formelindex b für die Zahl Null stehen, $D_1$, Y und X die in Anspruch 1 genannten Bedeutungen haben und $D_2$ den Benzolkern darstellt, der außer durch X noch durch mindestens eine Sulfogruppe substituiert ist und zusätzlich noch durch einen weiteren Substituenten aus der Gruppe ($C_1$-$C_4$) Alkyl, ($C_1$-$C_4$) Alkoxy, Nitro und Chlor substituiert sein kann.

8. Verbindungen nach Anspruch 7, in welchen $D_1$, Y, X, a und b die in Anspruch 7 genannten Bedeutungen haben und $D_2$ für den Naphthalinkern steht, der außer durch X noch durch mindestens eine Sulfogruppe substituiert ist.

9. Verfahren zur Herstellung der in Anspruch 1 genannten und definierten verbindungen, dadurch gekennzeichnet, daß man ein Diazoniumsalz einer Aminoverbindung der allgemeinen Formel (2)

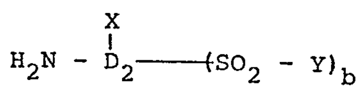

(2)

in welcher $D_2$, X, Y und b die in Anspruch 1 genannten Bedeutungen haben, mit 1-Amino-8-hydroxy-naphthalin-3,6-disulfonsäure in mittelstarkem bis stark saurem Medium kuppelt und sodann die hergestellte Monoazoverbindung in schwach saurem bis neutralem oder schwach alkalischem Medium mit einem Diazoniumsalz einer Aminoverbindung der allgemeinen Formel (3)

$$(Y—SO_2)_a—D_1—NH_2 \quad (3)$$

in welcher $D_1$, Y und a die in Anspruch 1 genannten Bedeutungen haben, kuppelt, wobei man die Amine der Formeln (2) und (3) so wählt, daß mindestens eines eine Gruppe der Formel —$SO_2$—Y gebunden enthält.

10. Verfahren zur Herstellung der Verbindungen nach Anspruch 1, in welchen Y für die β-Sulfatoäthylgruppe steht, dadurch gekennzeichnet, daß man gemäß der im Anspruch 9 angegebenen Verfahrensweise eine oder beide der aromatischen Amine entsprechend der allgemeinen Formeln (2) und (3), in welchen jedoch eines der beiden Y oder beide Y für die β-Hydroxyäthylgruppe stehen, mit 1-Amino-8-naphthol-3,6-disulfonsäure kuppelt und die so hergestellte Disazoverbindung mit der Konstitution entsprechend der allgemeinen Formel (1), in welcher jedoch eines der beiden Y oder beide für die β-Hydroxyäthylgruppe stehen, mit einem Sulfatierungsmittel in die Sulfatoverbindung entsprechend der allgemeinen Formel (1) überführt.

11. Verwendung der Verbindungen von Anspruch 1 oder der nach Anspruch 9 oder 10 hergestellten Verbindungen als Farbstoffe.

12. Verwendung nach Anspruch 11 zum Färben und Bedrucken von Fasermaterialien aus nativer oder regenerierter Cellulose oder aus natürlichen, regenerierten oder synthetischen Polyamiden oder Polyurethanen oder von Leder.

## Claims

1. Disazo compounds which, described in form of the free acid, have the general formula (1)

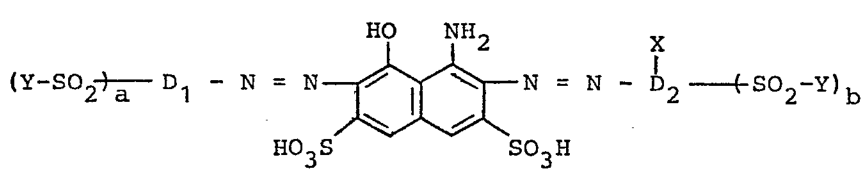

(I)

in which

$D_1$ denotes the benzene or naphthalene nucleus, which apart from the group Y—$SO_2$—, can be further substituted by one or two substituents from the group of fluorine, chlorine, bromine, carboxy, ($C_1$-$C_4$)-alkyl, ($C_1$-$C_4$)-alkoxy and nitro, and/or by one, two or three sulfo groups ;

$D_2$ denotes the benzene or naphthalene nucleus, which is substituted by the substituent X defined below, and which, apart from the group —$SO_2$—Y, can be further substituted by one or two substituents from the group of carboxy, ($C_1$-$C_4$)-alkyl and ($C_1$-$C_4$)-alkoxy, and/or by one substituent from the group of fluorine, chlorine, bromine and nitro, and/or by one, two or three sulfo groups, and $D_1$ and $D_2$ can be identical to or different from one another ;

X is necessarily bonded to $D_2$ in ortho-position to the azo group and denotes a fluorine, chlorine or bromine atom ;

Y denotes the vinyl, β-sulfatoethyl, β-chloroethyl, β-thiosulfatoethyl or a β-acyloxy-ethyl group with the acyl radical of an alkanecarboxylic acid with 1 to 4 C-atoms in the alkyl radical, or of a benzoic acid optionally substituted by carboxy, sulfo and/or ($C_1$-$C_4$)-alkyl, or of benzenesulfonic acid optionally substituted by carboxy, sulfo and/or ($C_1$-$C_4$)-alkyl ;

a represents the number zero or 1 and

b represents the number zero or 1,

and the sum of (a + b) is 1 or 2 ; and the salts thereof.

2. Compounds according to claim 1, corresponding to the general formula (1), in which :

b represents the number 1 ;

$D_2$ denotes the benzene nucleus to which the substituent X is bonded in o-position to the azo group, and to which a substituent from the group of ($C_1$-$C_4$)-alkyl, ($C_1$-$C_4$)-alkoxy, chlorine, bromine and sulfo can additionally be bonded, and $D_1$, Y, X and a have the meanings mentioned in claim 1.

3. Compounds according to claim 2, in which

$D_2$ and b as well as X and Y have the meanings mentioned in claim 2, and

a represents the number 1 and

$D_1$ denotes the benzene nucleus which can be additionally substituted by one or two substituents from the group of ($C_1$-$C_4$)-alkyl, ($C_1$-$C_4$)-alkoxy, chlorine, fluorine, carboxy, sulfo and nitro, and the group of the formula —$SO_2$—Y is bonded to the benzene nucleus in m- or p-position to the azo group, and the formula radicals Y—$SO_2$—$D_1$— and —$D_2$(—X)—$SO_2$—Y can be identical to or different from one another.

4. Compounds according to claim 2, in which

$D_2$ and b as well as X and Y have the meanings mentioned in claim 2, and

a represents the number 1 and

$D_1$ denotes the naphthalene nucleus which can be additionally substituted by one or two sulfo groups.

5. Compounds according to claim 2, in which

$D_2$ and b as well as X and Y have the meanings mentioned in claim 2, and in which

a represents the number zero and

$D_1$ denotes the monosulfonaphthyl, dusulfonaphthyl or trisulfonaphthyl radical.

6. Compounds according to claim 2, in which

$D_2$ and b as well as X and Y have the meanings mentioned in claim 2, and

a represents the number zero and

$D_1$ denotes the phenyl radical wich is unsubstituted or substituted by 1 or 2 substituents from the group of sulfo, carboxy, ($C_1$-$C_4$)-alkyl, ($C_1$-$C_4$)-alkoxy, chlorine, bromine and nitro.

7. Compounds according to claim 1 in which the formula index a represents the number 1 and the formula index b represents the number zero, $D_1$, Y and X have the meanings mentioned in claim 1 and $D_2$ represents the benzene nucleus which, in addition to X, is further substituted by at least one sulfo group, and can be additionally substituted by a further substituent from the group of ($C_1$-$C_4$)-alkyl, ($C_1$-$C_4$)-alkoxy, nitro and chlorine.

8. Compounds according to claim 7, in which $D_1$, Y, X, a and b have the meanings mentioned in claim 7, and $D_2$ represents the naphthalene nucleus which, in addition to X, is further substituted by at least one sulfo group.

9. Process for the preparation of the compounds mentioned and defined in claim 1, characterized in that a diazonium salt of an amino compound of the general formula (2)

$$H_2N - \overset{\displaystyle X}{\underset{|}{D_2}} \text{———} (SO_2 - Y)_b \qquad (2)$$

in which $D_2$, X, Y and b have the meanings mentioned in claim 1, is coupled with 1-amino-8-hydroxynaphthalene-3,6-disulfonic acid in moderately to strongly acidic medium, and the monoazo compound prepared is then coupled, in weakly acidic to neutral or weakly alkaline medium, with a diazonium salt of an amino compound of the general formula (3)

$$(Y—SO_2)_a——D_1—NH_2 \qquad (3)$$

in which $D_1$, Y and a have the meanings mentioned in claim 1, the amines of the formulae (2) and (3) being so chosen that at least one of them contains a group of the formula $—SO_2—Y$ bonded to it.

10. Process for the preparation of the compounds of claim 1, in which Y represents the β-sulfatoethyl group, characterized in that, according to the procedure given in claim 9, one or both of the aromatic amines corresponding to the general formulae (2) and (3), in which, however, one of the two Ys or both Ys represent the β-hydroxyethyl group, are coupled with 1-amino-8-naphthol-3,6-disulfonic acid, and the disazo compound thus prepared, with the constitution corresponding to the general formula (1) in which, however, one of the two Ys or both Ys represent the β-hydroxyethyl group, is converted by means of a sulfating agent into the sulfato compound corresponding to the general formula (1).

11. Use of the compounds of claim 1 or of the compounds prepared according to claim 9 or 10, as dyestuffs.

12. Use according to claim 11 for the dyeing and printing of fibre materials made of native or regenerated cellulose or of natural, regenerated or synthetic polyamides or polyurethanes, or of leather.

**Revendications**

1. Composés bisazoïques caractérisés en ce que, sous forme de l'acide libre, ils répondent à la formule générale (1) :

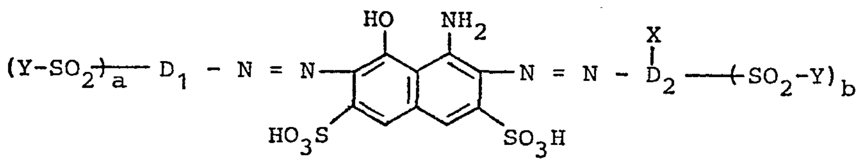

(1)

dans laquelle

$D_1$ est le noyau benzénique ou naphtalénique qui peut porter comme substituants, en plus du groupe $Y—SO_2—$, encore un ou deux substituants choisis parmi un atome de fluor, de chlore ou de brome, un groupe carboxyle, alkyle (1 à 4 atomes de carbone), alcoxy (1 à 4 atomes de carbone) et nitro et/ou un, deux ou trois groupes sulfo ;

$D_2$ est le noyau benzénique ou naphtalénique, qui peut porter comme substituants le substituant X défini ci-après et, en plus du groupe $—SO_2—Y$, également un ou deux substituants choisis parmi un groupe carboxyle, alkyle ayant 1 à 4 atomes de carbone et alcoxy ayant 1 à 4 atomes de carbone et/ou un substituant choisi parmi un atome de fluor, de chlore ou de brome et un groupe nitro et/ou un, deux ou trois groupes sulfo ;

$D_1$ et $D_2$ pouvant être identiques ou différents ;

X est obligatoirement situé sur $D_2$ en position ortho par rapport au groupe azoïque et il représente un atome de fluor, de chlore ou de brome ;

Y représente le groupe vinyle, sulfato-bêta éthyle, chloro-bêta éthyle, thiosulfato-bêta éthyle ou un groupe acyloxy-bêta éthyle comportant le radical acyle d'un acide alcane carboxylique comportant 1 à 4 atomes de carbone dans le radical alkyle, ou d'un acide benzoïque éventuellement substitué par un groupe carboxyle, sulfo et/ou alkyle ayant 1 à 4 atomes de carbone ou d'un acide benzène sulfonique éventuellement substitué par un groupe carboxyle, sulfo et/ou alkyle ayant 1 à 4 atomes de carbone ;

a représente le nombre 0 ou 1, et

b représente le nombre 0 ou 1, et

la somme (a + b) vaut 1 ou 2 et leurs sels.

2. Composés selon la revendication 1, caractérisés en ce qu'ils répondent à la formule générale (1) dans laquelle :

b représente le nombre 1 ;

$D_2$ représente le noyau benzénique sur lequel est fixé, en position ortho par rapport au groupe azoïque, le substituant X et qui peut comporter en outre un substituant choisi parmi un groupe alkyle ayant 1 à 4 atomes de carbone, alcoxy ayant 1 à 4 atomes de carbone, un atome de chlore ou de brome et un groupe sulfo, et

$D_1$, Y, X et a ont les sens indiqués à la revendication 1.

3. Composés selon la revendication 2, caractérisés en ce que $D_2$ et b ainsi que X et Y ont les sens indiqués à la revendication 2, a représente le nombre 1 et $D_1$ représente le noyau benzénique qui peut encore être substitué par un ou deux substituants choisis parmi un groupe alkyle ayant 1 à 4 atomes de carbone, alcoxy ayant 1 à 4 atomes de carbone, un atome de chlore ou de fluor, un groupe carboxyle, sulfo et nitro, le groupe de formule $—SO_2—Y$ étant fixé sur le noyau benzénique en position méta ou para par rapport au groupe azoïque, et les radicaux de formule $Y—SO_2—D_1—$ et $—D_2(X)—SO_2—Y$ pouvant être identiques ou différents.

4. Composés selon la revendication 2, caractérisés en ce que $D_2$ et b ainsi que X et Y ont les sens indiqués à la revendication 2, a représente le nombre 1 et $D_1$ représente le noyau naphtalénique qui peut encore être substitué par un ou deux groupes sulfo.

5. Composés selon la revendication 2, caractérisés en ce que $D_2$ et b ainsi X et Y ont le sens indiqué à la revendication 2, a représente le nombre 0 et $D_1$ le radical monosulfo-, disulfo- ou trisulfo-naphtyle.

6. Composés selon la revendication 2, caractérisés en ce que $D_2$ et b ainsi que X et Y ont les sens indiqués à la revendication 2 ; a représente le nombre 0, et $D_1$ le radical phényle, qui n'est pas substitué ou est substitué par un ou deux substituants choisis parmi un groupe sulfo, carboxyle, alkyle ayant 1 à 4 atomes de carbone, alcoxy ayant 1 à 4 atomes de carbone, un atome de chlore ou de brome et un groupe nitro.

7. Composés selon la revendication 1, caractérisés en ce que l'indice a représente le nombre 1 et l'indice b le nombre 0 ; $D_1$, Y et X ont les sens indiqués à la revendication 1, et $D_2$ représente le noyau benzénique qui, en plus de X, est encore substitué par au moins un groupe sulfo et peut être substitué encore par un autre substituant choisi parmi un groupe alkyle ayant 1 à 4 atomes de carbone, alcoxy ayant 1 à 4 atomes de carbone, nitro et un atome de chlore.

8. Composés selon la revendication 7, caractérisés en ce que $D_1$, Y, X, a et b ont le sens indiqué à la revendication 7, et $D_2$ représente le noyau naphtalénique qui, en plus de X, est encore substitué par au moins un groupe sulfo.

9. Procédé pour préparer les composés cités et définis à la revendication 1, procédé caractérisé en ce qu'on copule un sel de diazonium d'un composé aminé répondant à la formule générale (2) :

$$H_2N - \overset{\overset{\displaystyle X}{|}}{D_2} —— (SO_2 - Y)_b \qquad (2)$$

dans laquelle $D_2$, X, Y et b ont les sens indiqués à la revendication 1 avec l'acide amino-1 hydroxy-8 naphtalène disulfonique-3,6, en milieu moyennement à fortement acide, puis l'on copule le composé monozoïque ainsi préparé, en milieu faiblement acide à neutre ou faiblement alcalin, avec un sel de diazonium d'un composé aminé de formule générale (3) :

$$(Y—SO_2)_a——D_1—NH_2 \qquad (3)$$

dans laquelle $D_1$, Y et a ont le sens indiqué à la revendication 1, en choisissant les amines répondant aux formules (2) et (3) de manière que l'une au moins contienne un groupe de formule $—SO_2—Y$.

10. Procédé pour préparer les composés selon la revendication 1, dans lesquels Y représente le groupe sulfato-bêta éthyle, procédé caractérisé en ce qu'on copule selon la façon d'opérer indiquée à la revendication 9 une amine aromatique ou les deux amines aromatiques, repondant aux formules générales (2) et (3), dans lesquelles cependant l'un des deux Y ou les deux Y représente(nt) le groupe hydroxy-bêta éthyle, avec l'acide amino-1 naphtol-6 disulfonique-3,6 et l'on transforme le composé bisazoïque ainsi préparé, dont la forme de constitution correspond à la formule générale (1), dans laquelle cependant l'un des deux Y, ou les deux, représente(nt) le groupe hydroxy-β-éthyle, avec un agent de sulfatation en le composé sulfato répondant à la formule générale (1).

11. Utilisation des composés selon la revendication 1, ou des composés préparés selon la revendication 9 ou 10, comme colorants.

12. Utilisation selon la revendication 11 pour teindre et imprimer des matières en des fibres de cellulose native ou régénérée ou en des polyamides naturels, régénérés ou synthétiques ou en du polyuréthane ou en du cuir.